# EUROPEAN PATENT SPECIFICATION

(11) **EP 4 461 517 B1**
(45) Date of publication and mention of the grant of the patent: **22.10.2025**
(21) Application number: 24174804.5
(22) Date of filing: 08.05.2024
(51) Int. Cl.: B29C 70/30, B29D 99/00, B64C 3/18, B64C 3/20, B64F 5/10, B29L 31/30, B64C 1/00

(54) **METHOD FOR MANUFACTURING A BOX-SHAPED STRUCTURE IN COMPOSITE MATERIAL FOR AIRCRAFT**
VERFAHREN ZUR HERSTELLUNG EINER KASTENFÖRMIGEN STRUKTUR AUS VERBUNDMATERIAL FÜR FLUGZEUGE
PROCÉDÉ DE FABRICATION D'UNE STRUCTURE EN FORME DE CAISSON EN MATÉRIAU COMPOSITE POUR AÉRONEF

(30) Priority: 11.05.2023 IT 202300009456
(43) Date of publication of application: 13.11.2024
(73) Proprietor: Leonardo S.p.a., 00195 Roma (IT)
(72) Inventor: CORVAGLIA, Stefano Giuseppe, 74023 Grottaglie (TA) (IT); GALLO, Nicola, 74023 Grottaglie (TA) (IT); CORTELLUCCI, Moreno, 74023 Grottaglie (TA) (IT); RICCIARDI, Alfredo, 74023 Grottaglie (TA) (IT)
(74) Representative: Studio Torta S.p.A.

(56) References cited:
- EP-B1- 2 989 001
- US-A1- 2020 156 759
- US-B2- 8 851 422

## Description

### CROSS-REFERENCE TO RELATED APPLICATIONS

This patent application claims priority from Italian patent application no. 102023000009456 filed on May 11, 2023.

### TECHNICAL FIELD

The invention relates to a method for manufacturing a box-shaped structure made of composite material for aircraft, in particular for a horizontal stabilizer of an airplane, to which explicit reference will be made in the description below without because of this lacking generality.

### STATE OF THE ART

Structural components are known, which are used in the aviation industry, for example fuselages and parts thereof, and are made of composite materials. US 8851422 B2 discloses a method for manufacturing a box-shaped structure for aircrafts.

In the state of the art there are aeronautical structural components that are made of lights alloys, hence of metal materials, and will then build part of the fuselage of the aircraft.

As it is known, fuselages are designed to ensure an adequate protection of the payload (crew, passengers, goods, etc.), but, at the same time, they cannot exceed set weight limits.

Furthermore, the use of metal components, despite ensuring a greater resistance, leads to an increase in overall costs.

Hence, structural components made of composite materials are needed in order to reduce the overall weight of aircraft.

As a matter of fact, the use of composite materials reduces the overall weight of aircraft and, at the same time, ensures very resistant structures.

Furthermore, the use of metal elements and the installation thereof in contact with the structures determine galvanic coupling problems, with consequent risks of corrosion of the metal and need to increase inspection levels. This leads to an increase in overall costs for the manufacturers of said components and, hence, for airlines.

Therefore, the use of composite materials stems from the need to reduce the overall weight of aircraft, to eliminate or minimize the corrosion problems affecting aeronautical structures and to increase the resistance to fatigue thereof.

As it is known, the horizontal stabilizer is a structural component with fixed surfaces that generally is part of the tail portion of the fuselage of an airplane.

In particular, the stabilizer is an aerodynamic surface that has the function of stabilizing the airplane along the pitch axis.

More in particular, a typical airplane comprises two horizontal stabilizers, each defined by a sort of wing, usually with much smaller dimensions than the main wings of the airplane, projecting from the tail portion of the fuselage.

The stabilizers extend on opposite sides of the fuselage, generally along a plane that is substantially parallel to the plane of the wings.

More in detail, the two stabilizers are coupled, at their locked ends, to a central box-shaped element known as "center box" and incorporated in the end part of the fuselage.

In other words, the center box is interposed between the two stabilizers.

Each stabilizer carries, on the inside, a box-shaped structure made of composite material.

In particular, said structure basically comprises:
- an upper wall;
- a lower wall facing the upper wall and spaced apart from the latter by a non-zero amount; and
- a plurality of spars extending between the upper and lower walls, defining connecting elements between them and delimiting, with the aforesaid upper and lower walls, respective elongated cavities, each extending between a front opening and a rear opening arranged in planes that are transversal to the walls and to the spars.

As mentioned above, the use of composite materials reduces the overall weight of the structural components and, hence, of aircraft and, at the same time, ensures very resistant structures.

The upper and lower walls are approximately parallel and, more precisely, slightly convergent towards the front openings or towards the rear openings.

The spars consist of partitions transversal and, more in particular, substantially orthogonal to the upper and lower walls.

In particular, each spar consists of two elongated section bars or profile beams or profiles generally having a C-shaped profile and including a back or flange and two wings orthogonally projecting from the opposite end edges of the flange.

According to an alternative embodiment, the aforesaid section bars or profile beams or profiles can have a J-shaped profile.

In order to form a spar, the two C-section profiles are joined to one another along the respective flanges so as to have opposite concavities.

The monolithic box-shaped structure described above is manufactured by means of a known method, which comprises the steps indicated below, starting from a thermosetting (resin) matrix prepreg reinforced by fibers of different nature, such as carbon fibers, aramid fibers, glass fibers, etc..

EP-A-3871869, filed by the Applicant, discloses a method for manufacturing a box-shaped monolithic structure for a horizontal stabilizer of an airplane of the type described above.

More in particular, according to the method described in EP-A-3871869, the aforesaid C-section profiles are laminated on respective elongated forming and support tools with a substantially parallelepiped-shaped profile, which are subsequently used to hold the spars in the respective predefined positions within the box-shaped structure during the manufacturing step.

Each tool consists of a substantially parallelepiped-shaped elongated body, which is delimited by flat faces and has a cross section corresponding, in terms of shape, to the one of the aforesaid elongated cavities of the structure to be manufactured.

In particular, each C-section profile is laminated on three flat faces of the forming and support tool, preferably after the application of a resin-based adhesive agent (known as "tackifier").

A first face of the tool is completely coated by the prepreg, whereas the other two faces of the tool adjacent to the first face, which are orthogonal to the latter and parallel to one another, are coated only along a segment.

Hence, each tool can support, on opposite sides, two C-section profiles made of prepreg.

Depending on the composition of the tool, a so-called "costing" thereof could have to be carried out before the lamination of the section bars, through application of suitable separator films, tubular bags, ventilation fabrics.

After a vacuum consolidation at a predetermined temperature, the C-section profiles are joined two by two in the way described above so as to form the desired number of spars.

In detail, each spar is arranged so that:
- the flanges of the relative pair of C-section profiles making it up are interposed between two flat faces facing one another of two tools adjacent to one another; and
- the wings of each profile rest on respective flat faces of the relative tool parallel to one another and substantially orthogonal to the flat face supporting the flange of the section profile.

The assembly consisting of spars and tools (and possibly additional filling elements known as "noodles") is inserted into a forming mold including a lower plate, an upper plate and two opposite side plates connecting the upper and bottom plates.

In particular, one or more layers (plies) of prepreg composite material are laminated on each of the two upper and lower plates to define the upper and lower skins, which will constitute, after the curing step, the upper and lower walls of the box-shaped structure to be manufactured.

Once the upper and lower skins are laminated, the preformed spars held in position by their respective forming and support tools are placed on the lower plate of the forming mold carrying the lower skin; subsequently, the upper plate of the forming mold carrying the upper skin is closed onto the side walls of the mold itself and onto the assembly consisting of the preformed spars and the tools.

At this point, a ventilation fabric and a tubular bag are inserted into each tool (which is longitudinally hollow) .

Furthermore, known components such as separator films, ventilation fabric and a bag film are placed on the outside of the forming mold so as to create so-called front and rear sealed envelope bags.

The ends of the contiguous tubular bags are also closed and sealed to one another.

At this point, the prepared forming mold is placed inside an autoclave to carry out the curing operation at predetermined pressure and temperature values (for example, for epoxy resins, the curing temperature is circa 180°C and the curing pressure is between 6 and 7 bar) .

The curing pressure acts both outside the structure being manufactured and inside the hollow tools and, therefore, inside the cavities of the structure itself, through the tubular bags.

Once the curing is complete, the bags and the forming and support tools are removed, resulting in the box-shaped monolithic structure consisting of the upper and lower walls (skins) and the spars arranged transversely between them.

Each box-shaped structure, defining a respective stabilizer, is then joined to the aforementioned center box.

There is an increasing need to reduce the total number of components and to further reduce the overall weight of the airplane.

For example, the use of the center box poses a certain assembly difficulty at the center of the two half-wings constituting the horizontal stabilizers, especially in the case of small-sized aircraft.

In accordance with the above, construction solutions have become widespread, in which the center box, which is defined by a complex and relatively heavy box-shaped element, is replaced by a simple beam junction element, for example a relatively thin doubleT-section profile beam or profile.

To this aim, each above-described box-shaped structure must be further elongated along its longitudinal direction so as to compensate for the material loss resulting from the removal of the center box (since the extension of the stabilizer must remain the same).

However, elongating the box-shaped structure entails structural challenges within the stabilizer, particularly regarding the rigidity and structural stability necessary to ensure the nominal use performance of the horizontal stabilizers.

To solve this problem, some known solutions involve the insertion of a reinforcing rib in a predetermined longitudinal position of the box-shaped structure (or at an axial coordinate, relative to a longitudinal axis of the box-shaped structure).

More in detail, the reinforcing rib consists of a series of transversal partitions, more in particular substantially orthogonal to the upper and lower walls and to the spars, aligned in series one after the other.

In other words, the reinforcing rib extends transversely to the longitudinal direction of extension of the box-shaped structure, at a given axial coordinate thereof.

In the state of the art, the insertion of the rib is rather complicated. According to a known solution, once the above-described box-shaped monolithic structure is completed, portions of material on the skins and/or at the flanges of the spars are removed to access the inside of the aforementioned cavities.

This procedure undoubtedly introduces complications in the process of manufacturing the stabilizer, as it is necessary to assemble the rib in quite narrow and confined spaces, without the possibility of properly viewing the assembly location. Furthermore, given the nature of the composite fiber material, there may be dimensional tolerance errors between the various components (for example, between spars and skins).

Furthermore, the assembly process of the reinforcing rib becomes increasingly complicated as the size of the aircraft and, thus, of the stabilizers to be manufactured decreases.

Therefore, the Applicant has observed that the described method and the box-shaped structure obtained thereby are open to improvements, in particular in order to strengthen the box-shaped structure, while avoiding excessive complications in the manufacturing process.

### SUBJECT-MATTER AND SUMMARY OF THE INVENTION

The object of the invention is to provide a method for manufacturing a box-shaped structure made of composite material for an aircraft as well as a box-shaped structure, which are highly reliable and cost-effective and fulfil at least one of the needs specified above and associated with known methods for manufacturing composite material box-shaped structures.

According to the invention, this object is achieved by a method for manufacturing a box-shaped structure made of composite material and by a box-shaped structure as claimed in the respective independent claims.

### BRIEF DESCRIPTION OF THE DRAWINGS

The invention will be best understood upon perusal of the following description of some preferred nonlimiting embodiments thereof, which are discussed by mere way of example, with reference to the accompanying drawings, wherein:
- figure 1 is a schematic plan view, with parts removed for greater clarity, of a rear or tail portion of an aircraft, said tail portion comprising two horizontal stabilizers, each including a box-shaped structure obtained by means of the manufacturing method according to the invention;
- figure 1a shows, in a perspective view, on an enlarged scale and with parts removed for greater clarity, part of the box-shaped structure of a stabilizer of figure 1;
- figures 2 and 3 schematically show, in a perspective view, on an enlarged scale and with parts removed for greater clarity, the manufacturing of spars of the box-shaped structure;
- figure 4 is an exploded perspective view, with parts removed for greater clarity, schematically showing the coupling of the spars to a first (lower) wall of the box-shaped structure, according to the method of the invention;
- figures 5 and 6 show, in a schematic perspective view and with parts removed for greater clarity, the manufacturing of a second (upper) wall of the box-shaped structure, according to a first embodiment of the method of the invention;
- figures 7 to 12 show, in a schematic perspective view and with parts removed for greater clarity, the manufacturing of a second (upper) wall of the box-shaped structure, according to a second embodiment of the method of the invention;
- figures 13 to 17 sequentially show, in a schematic perspective view and with parts removed for greater clarity, some steps of the method according to the invention concerning the arrangement of the second wall relative to the assembly consisting of the spars and the first wall, the insertion of a reinforcing rib in the box-shaped structure and the joining of two distinct and separate portions defining the aforesaid second wall, in accordance with the invention.

### DETAILED DESCRIPTION

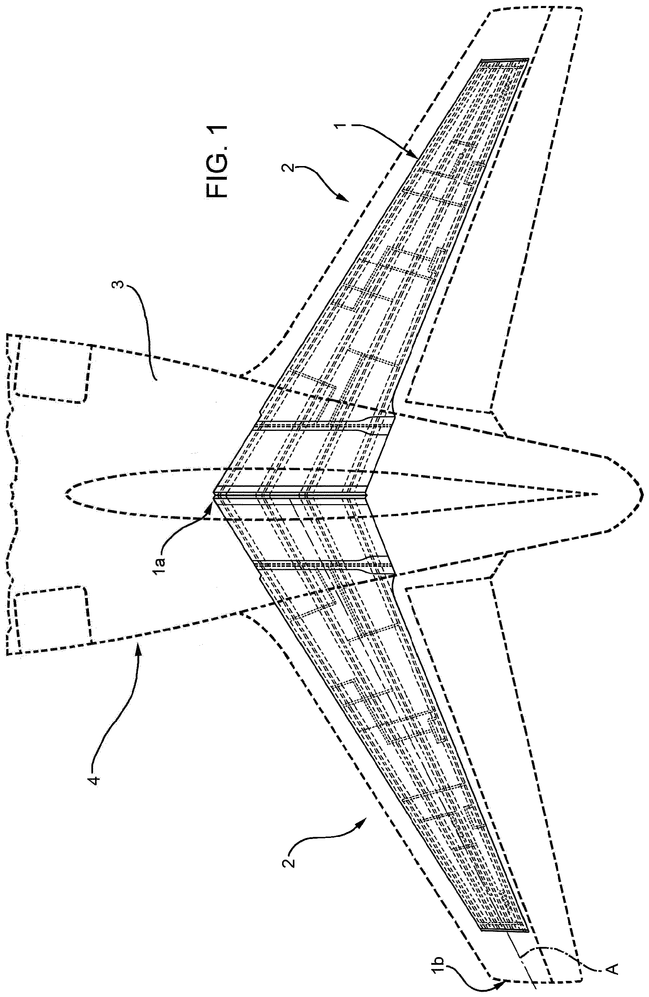

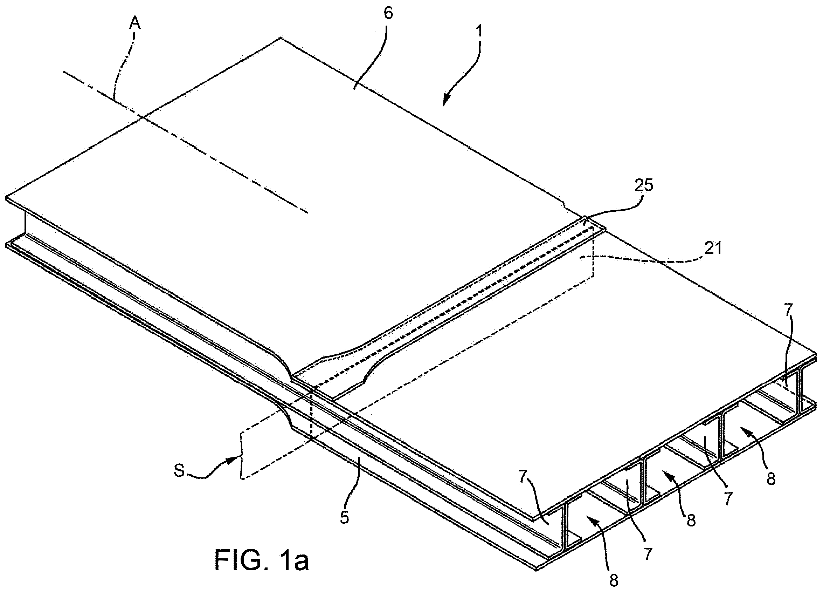

With reference to figures 1 and 1a, number 1 indicates, as a whole, a box-shaped structure for aircraft made of composite material.

In particular, the structure 1 is intended for use in (and, more precisely, for the manufacturing of) a horizontal stabilizer 2 of an aircraft fuselage 3, for example of an airplane 4, to which reference will be made in this description without because of this lacking generality.

As visible in figures 1 and 1a, the structure 1 has a longitudinal axis A, longitudinally extends between a first axial end 1a and a second axial end 1b and comprises:
- a first wall 5, in particular a lower wall;
- a second wall 6, in particular an upper wall, facing, along its larger extension surface, the larger extension surface of the first wall 5 and spaced apart from the latter by a non-zero amount; and
- a plurality of interconnection elements or spars 7 longitudinally and transversely extending between the lower 5 and upper 6 walls and delimiting, between one another and with the aforesaid upper 5 and lower 6 walls, a series of elongated cavities 8, each longitudinally extending between the first axial end 1a and the second axial end 1b.

In the example described herein, the first axial end 1a represents a locked end of the stabilizer 2, whereas the second axial end 1b represents the free end of the stabilizer 2.

The lower 5 and upper 6 walls are, in the case shown herein, approximately parallel to one another. According to a possible alternative not shown herein, the walls 5 and 6 may also be slightly convergent towards the first end 1a or the second end 1b.

The spars 7 consist of partitions that are substantially orthogonal or, more generally, transversal to the lower 5 and upper 6 walls and are elongated in the longitudinal direction.

The structure 1 is manufactured starting from a polymer matrix prepreg, for example a thermosetting resin, reinforced with fibers of various kinds, such as carbon fibers and/or aramid fibers and/or glass fibers, etc..

Alternatively, the structure 1 could also be manufactured starting from a thermoplastic resin matrix prepreg reinforced with fibers of the type indicated above.

A method for manufacturing the structure 1 according to the invention will be disclosed below.

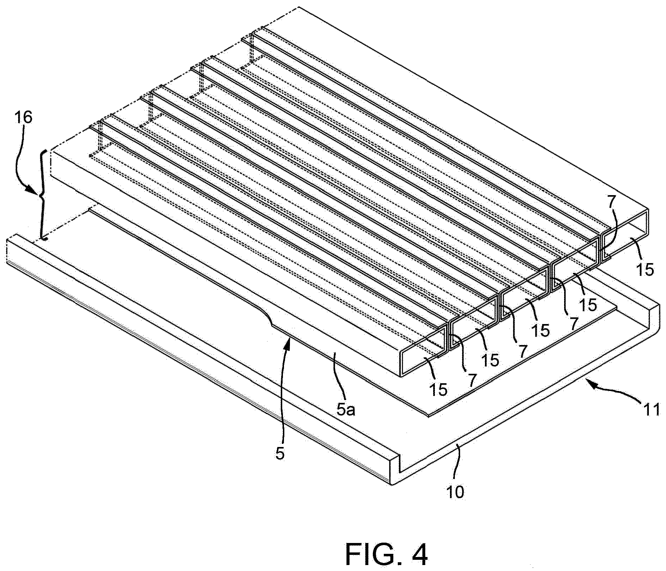

With reference to figure 4 and, in particular, to the lower portion of that figure, the first wall (i.e. the lower wall) 5 is manufactured by laminating a first plurality of layers of said prepreg composite material on a first forming plate 10 of a forming mold 11, so as to form a first composite material skin 5a defining the lower wall 5.

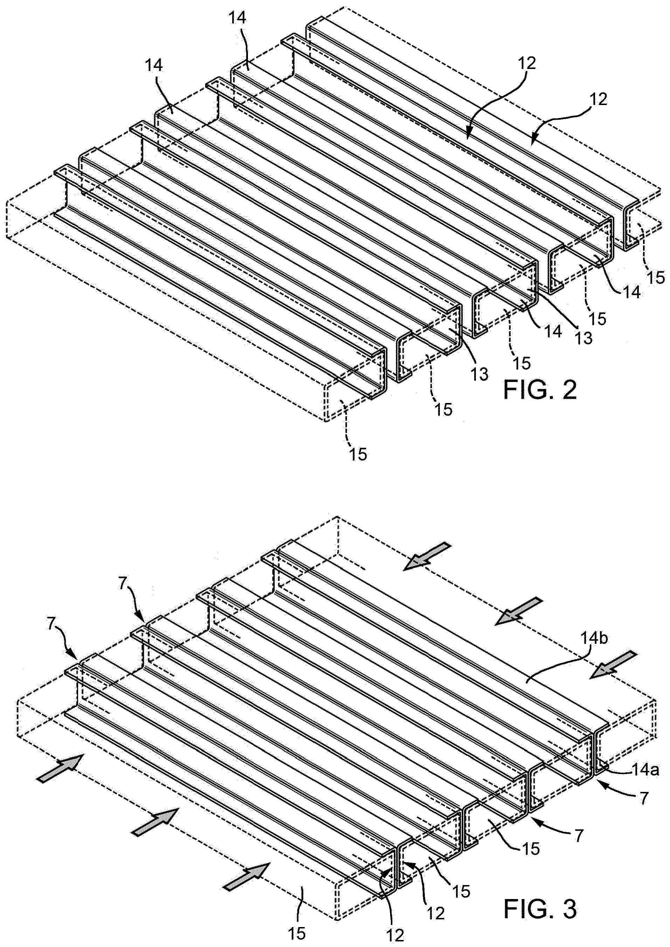

With reference to figures 2 and 3, the spars 7 are substantially obtained in the same manner as described in patent application EP-A-3871869, filed by the Applicant.

In detail, each spar 7 is obtained starting from two profiles or profile bars 12 elongated in the aforementioned longitudinal direction, having C-shaped cross sections and each consisting of a flange 13 and of two end appendages or winglets 14 transversely projecting in a substantially orthogonal direction from the opposite end edges of the flange 13 and arranged on the same side thereof. In particular, in order to form a spar 7, the two profiles 12 are joined to one another along the respective flanges 13 so as to have opposite concavities (figures 2 and 3).

More in detail, the profiles 12 are obtained by:
- providing a plurality of support tools 15 elongated along the aforementioned longitudinal direction, each having a cross section with a polygonal external profile complementary to the profile of the cavities 8 to be formed in the structure 1 and which are intended to subsequently hold the spars 7 in the predefined positions within the structure 1 during the manufacturing step; and
- laminating respective second pluralities of layers of said prepreg composite material on three contiguous walls of each support tool 15.

The term "laminating" in correlation with the lamination of the second plurality of layers mentioned above includes, for the purposes of this description:
- both a "direct" lamination of the layers of said second plurality on the support tool 15,
- and the simple arrangement of the layers of said second plurality on the support tool 15 and the subsequent bending on the aforesaid three contiguous walls, and wherein the layers have already been laminated on another auxiliary tool.

In the example shown herein, each support tool 15 has a parallelepiped-like shape, which is elongated in the aforementioned longitudinal direction and is hollow in the same direction.

In an embodiment which is not shown herein, each support tool 15 may have a more complex geometry, in order to adjust to the thickness differences that may be present within the stabilizer 2 both transversely and longitudinally.

Conveniently, the support tools 15 have a composition based on reinforcing material and polymer suited to permit a shift from a rigid state to a flexible elastomer-like state and vice versa in response to a heating and a cooling, respectively, namely in response to a temperature stimulus.

The polymer constituting the support tools 15 advantageously is a shape memory thermosetting or thermoplastic polymer of the known kind. The polymer can be, for example, a shape memory epoxy polymer, a shape memory cyanate ester polymer, a shape memory polyurethane polymer, a shape memory vinyl polymer, a shape memory polyimide polymer, a shape memory maleimide polymer or combinations thereof, including copolymers.

Thanks to the properties of the shape memory polymer, support tools 15 can regain their original rigid shape despite extensive repeated use and after numerous heating and cooling cycles.

The reinforcing material the said support tools 15 can include one or more elastic fibres.

In particular, the reinforcing material can also contain nylon fibers, lycra fibers, polyester fibers, carbon fibers, glass fibers, aramid fibers, boron fibers, basalt fibers, polymer fibers, chopped fibers, meshes, three-dimensional fiber preforms, plain weave fabrics, twill weave fabrics or other types of fabric and combinations thereof. A suitable commercial example of nylon fibers is the nylon produced by Invista (Wichita, Kans.).

In some embodiments, the support tools 15 may contain two or more different types of reinforcing materials.

Each profile 12 is then externally laminated on three contiguous walls of the respective support tool 15 in the rigid state, preferably after the application of a resin-based adhesive agent (known as "tackifier").

In particular, a wall of the support tool 15 in the rigid state is completely coated by the prepreg of the respective profile 12, whereas other two adjacent walls are only coated along a predefined segment (as shown in figure 2).

Therefore, each support tool 15 can support, on opposite sides, two prepreg C-section profiles 12.

Hence, the lamination of the profiles 12 is performed by directly laminating the prepreg material making up said second plurality of layers on the outer surface of the walls of the tools 15 in the rigid state.

Following the lamination, the profiles 12 are compacted as described in EP-A-3871869.

Upon completion of the compaction, in order to form the spars 7, the profiles 12 are joined two by two along the respective flanges 13 by placing respective pairs of support tools 15 (figure 3) side by side or next to one another, so that the profiles 12 have opposite concavities. The spars 7 are thus maintained at the desired distance from one another by means of the support tools 15.

Possible recesses or gaps in the spars 7 are filled with so-called *fillers* or *noodles* as described in EP-A-3871869.

According to an alternative embodiment, the support tools 15 are defined by rigid elements, for example metal elements, namely elements not permitting the shift from a rigid state to a flexible elastomer-like state and vice versa in response to a temperature stimulus, as described in the introduction to the description of EP-A-3871869.

In particular, in this last case, each support tool consists of an elongated, rigid, solid body substantially shaped like a parallelepiped and having a cross section corresponding, in terms of shape, to that of the elongated cavities 8 of the structure 1 to be manufactured. Before placing each spar, still in the form of a preformed prepreg, between two support tools, the latter undergo a coating operation consisting of the following successive steps:
- applying, on each support tool, a layer of separator agent, for example in the form of film, to facilitate the following extraction of the support tool from the respective elongated cavity;
- fitting a tubular bag onto each support tool prepared by so doing, leaving an excess of the tubular bag at each end of the support tool for a following sealing operation;

- wrapping a ventilation fabric on each support tool and on the outside of the tubular bag fixing the edges with a sealant;
- fitting a tubular separator film onto each support tool prepared by so doing, leaving - also in this case - an excess of the separator film at each end of the support tool for the following sealing operation;
- sealing the ends of the tubular bag and of the tubular separator film using a sealant;
- applying vacuum and waiting for the tubular separator film to shrink the entire coating prepared by so doing on the relative support tool.

The assembly formed by so doing, which consists of the spars 7, the support tools 15 and any possible additional structural, support or filler element (and, if necessary, coating element, in the case of the aforementioned alternative embodiment of the support tools 15), is inserted into the forming mold 11.

In particular, according to the manufacturing method, the support tools 15 side by side and the previously obtained spars 7 are longitudinally placed on the lower wall 5 already laid on the first plate 10, as shown in figure 4.

In particular, the spars 7 are laid on the lower wall 5 so that respective first winglets 14a of the spars 7 (figure 3) are coplanar and in contact with the lower wall 5 itself.

By so doing, a first assembly 16 of the structure 1 is defined, which includes the lower wall 5 and the spars 7 arranged on the latter.

In the case of the aforementioned alternative embodiment, wherein the support tools 15 are defined by rigid elements, for example, metal elements, a separator film, a ventilation fabric and a bag film are sequentially arranged on the entire forming mold; the bag film is sealed with a sealant at the base of the forming mold.

The aforementioned tubular separator film arranged on each support tool is opened at the ends; the excess length with respect to the respective support tool is cut off.

The aforementioned tubular bags present on the respective support tools are folded at the ends and sealed.

Hence, a so-called "envelope bag" is obtained by sealing the edge of the external bag film arranged on the forming mold to the ends of the tubular bags of the support tools and by further sealing the ends of the contiguous tubular bags to one another.

At this point, vacuum is applied inside the envelope bag until the material of the external bag shirks towards the external surface of the forming mold.

The ends of the tubular bags are then opened and, by continuing to apply vacuum, the tubular bags detach themselves from the respective support tools, tending to minimize the volume enclosed inside the envelope bag.

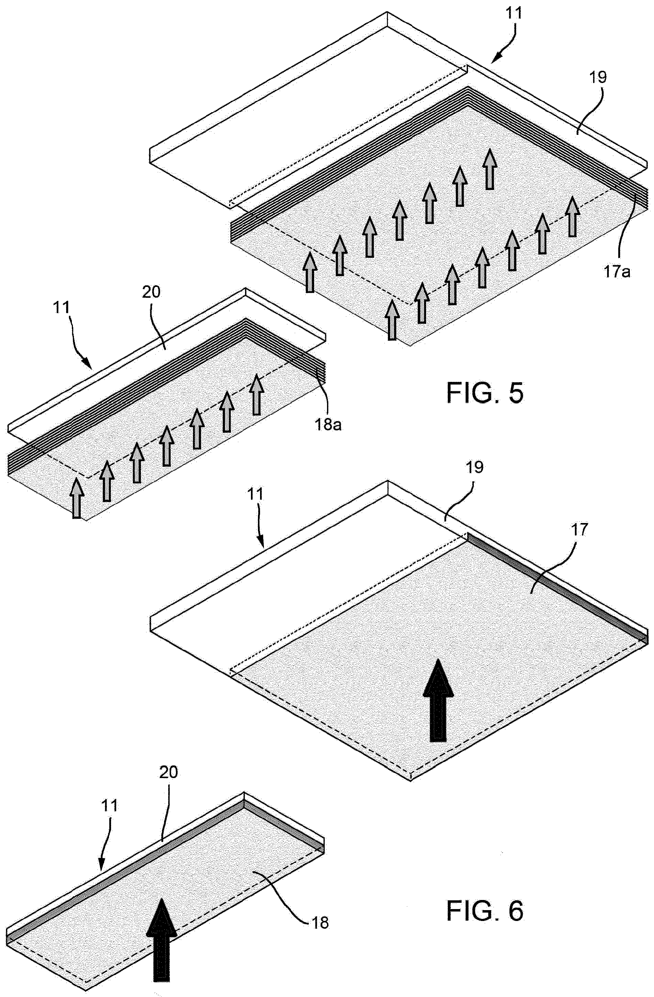

With reference to figures 5 and 6, the process used to manufactured the upper wall 6 will be described below, according to a first embodiment of the invention.

According to the invention, the upper wall or second wall 6 comprises a main portion 17 and a closing portion 18, which are coplanar to one another and define two distinct pieces with discontinuity.

In other words, the wall 6 is defined by two distinct and separate parts, which, at the same time, can be coupled to one another, as better explained below.

The method according to the invention entails laminating a third plurality 17a of layers of prepreg composite material on a second forming plate 19 of the forming mold 11, thus obtaining a main portion 17 of a second composite material skin 6a, said second skin 6a defining the upper wall 6 (figures 5 and 6).

According to this first preferred embodiment, the method according to the invention further entails laminating a fourth plurality 18a of layers of prepreg composite material onto a third forming plate 20 of the forming mold 11, which is separate and distinct from the second plate 19 (figure 5), so as to form a closing portion 18 of the second skin 6a, which is distinct and separate from the main portion 17 (figure 6) and can be coupled to the main portion 17 to define the second wall 6 in its entirety.

In accordance with what is specified in the introduction to the description and with reference to figures 1a, 14, 15 and 16, the structure 1 also comprises, according to the invention, a reinforcing rib 21 including a series of transversal reinforcing elements 22, each inserted into one of the aforementioned cavities 8 and between two adjacent spars 7.

In detail, the reinforcing rib 21 consists of a series of transversal partitions 22, more in particular substantially orthogonal to the walls 5 and 6 and transversal to the spars 7, aligned in series one after the other.

More in detail, the rib 21 is located in the area of a transversal sector S of the structure 1, which defines a given longitudinal position (or "axial coordinate") along the structure 1, interposed between the first end 1a and the second end 1b.

The reinforcing elements 22 are aligned with one another transversely to the axis A and in the area of (namely, along) the transversal sector S.

The reinforcing elements 22 can be made both of composite material and of metal material.

In an embodiment that is not shown herein, the rib 21 could be oriented orthogonally to the axis A.

Furthermore, according to an embodiment that is not shown herein, the reinforcing elements 22 could have different geometries, which are not shown herein, for example they could have a C-shaped section, a double T-shaped section, etc.

In other words, the reinforcing rib 21 extends transversely to the longitudinal direction of extension of the box-shaped structure 1.

The presence of rib 21 strengthens the structure 1 and increases the stability and rigidity thereof, in view of the removal of the aforementioned "center box".

Furthermore, the presence of rib 21 allows manufacturers to provide, in the area of the transversal sector S, control systems (for example, pneumatic, hydraulic or electric pistons) for the inclination of stabilizer 2 (namely, the incidence of the half-wing), which are known per se and are not shown or described in detail. This configuration allows some of the stresses arising from the aforementioned control systems to be offloaded onto the structure 1 and, in particular, onto the reinforcing rib 21, thereby improving the structural properties and the resistance to stresses of the structure 1.

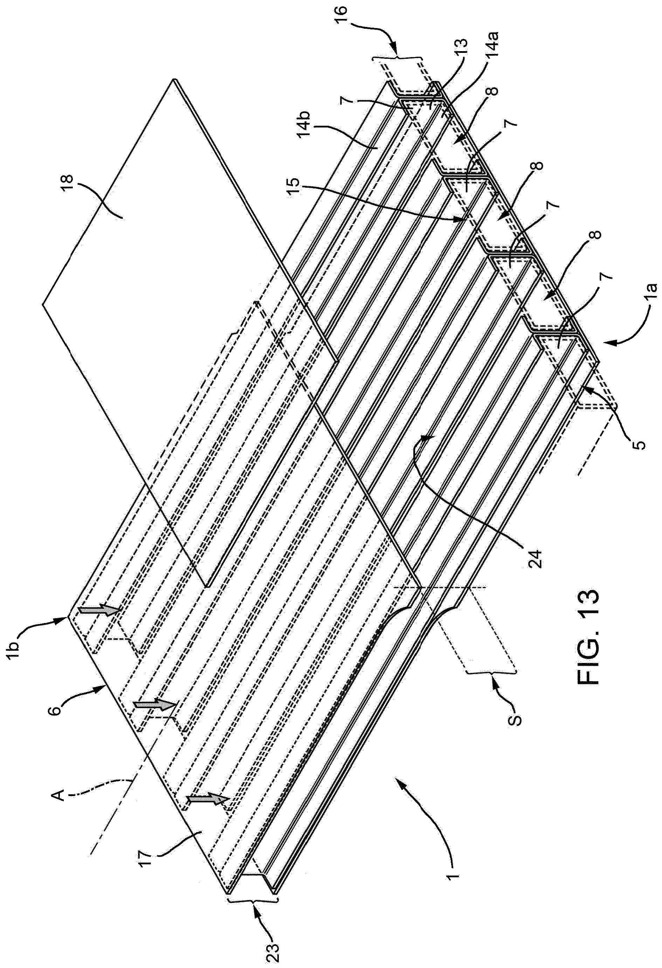

With reference to figures 13 to 16, the process for implementing the rib 21 within the structure 1 according to the invention will be described hereinafter.

It should be pointed out that figures 13 to 16 are schematic representations of the structure 1, which do not take into consideration the possible actual conformation of the structure 1 itself (which is fairly usually shaped as shown in figure 1).

In particular, the method according to the aforementioned first embodiment of the invention involves (figure 13) placing the main portion 17, which was previously laminated, on the aforementioned first assembly 16 (namely, on the assembly consisting of the spars 7 and of the first wall 5) so that the main portion 17 is in contact with respective second winglets 14b of the spars 7 opposite the first winglets 14a, so as to define part of the second wall 6 extending from one of the first end 1a and second end 1b (and, in particular, from the end 1b) to the transversal sector S.

The group comprising the first assembly 16 and the main portion 17 defines a second assembly 23 of the structure 1.

In this condition, the closing portion 18 remains separated from the second assembly 23, for example supported by the third plate 20.

The second assembly 23 obtained by so doing then has an opening 24 (figure 13) in the area of the upper wall 6, which extends from the transversal sector S to the first end 1a.

According to this first embodiment, following the placement of main portion 17 on the first assembly 16, a curing of the second assembly 23 is performed in a known manner, which is not described in detail, by applying a predetermined temperature and pressure to the first plurality, second plurality and third plurality 17a of composite material layers respectively laminated in the ways described above.

In other words, the layers constituting the second assembly 23 are cured together.

As schematically shown in figure 13, the support tools 15 are preferably kept inside the mold 11 during this step, so as to provide support to spars 7 to define the cavities 8 and determine the correct spacing between the first wall 5 and the main portion 17 of the second wall 6.

More precisely, during the step of curing the second assembly 23, the curing pressure is applied both inside the forming mold 11 and inside the support tools 15, whose walls are made flexible by the shift from the rigid state to the flexible elastomer-like state and are therefore forced, by the curing pressure itself, to adhere to said profiles 12 and to said first wall 5 and main portion 17.

Conveniently, the support tools 15 are configured to assume the flexible elastomer-like state at a temperature lower than the curing temperature and higher than 50°C.

In the case of the alternative embodiment discussed above, in which the support tools 15 are rigid and are not made of a polymer that is deformable in response to a temperature stimulus, the so-called envelope bag is manufactured, as mentioned above. Then, vacuum is applied inside the envelope bag until the material of the external bag shirks towards the external surface of the forming mold. In this case, therefore, the curing pressure is applied through the tubular bags and not through deformation of the support tools 15.

Once the second assembly 23 is cured, the support tools 15 can be removed, thus defining the aforementioned cavities 8.

In accordance with the above, according to this first embodiment of the invention, the layers constituting the closing portion 18 are cured separately from the main portion 17 and the second assembly 23.

In particular, a curing of the closing portion 18 is performed by applying a predetermined temperature and pressure to the fourth plurality of layers 18a placed (and previously laminated) on the third plate 20, according to a known procedure that is not described in detail.

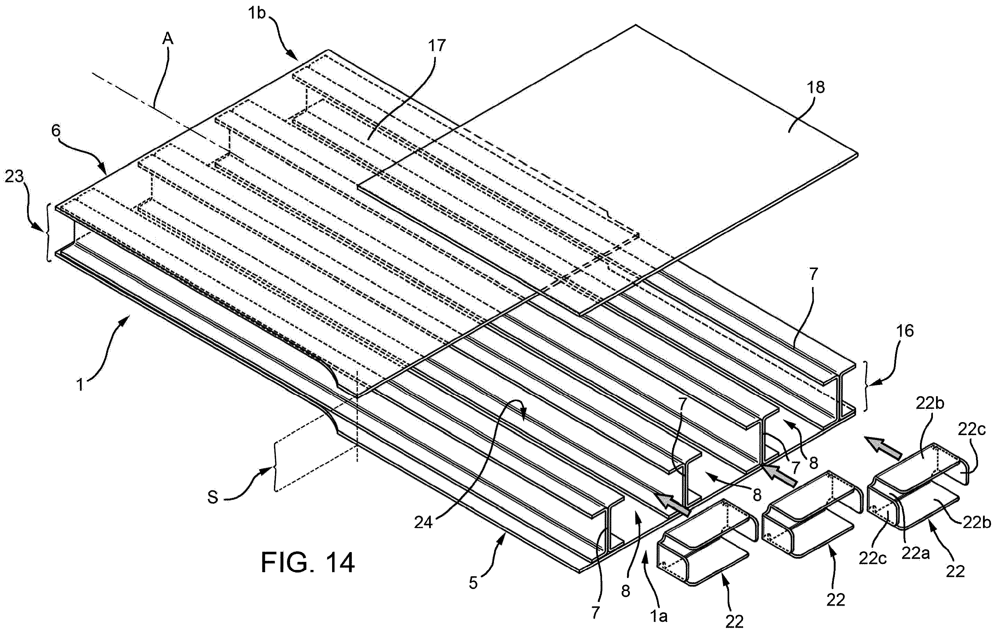

In order to implement the rib 21, following the placement of the main portion 17 on the first assembly 16 and, in particular, following the curing of the second assembly 23, the method according to the aforementioned first embodiment of the invention involves inserting the aforementioned reinforcing elements 22 into the cavities 8 and between the spars 7 in the area of the transversal sector S (figure 14).

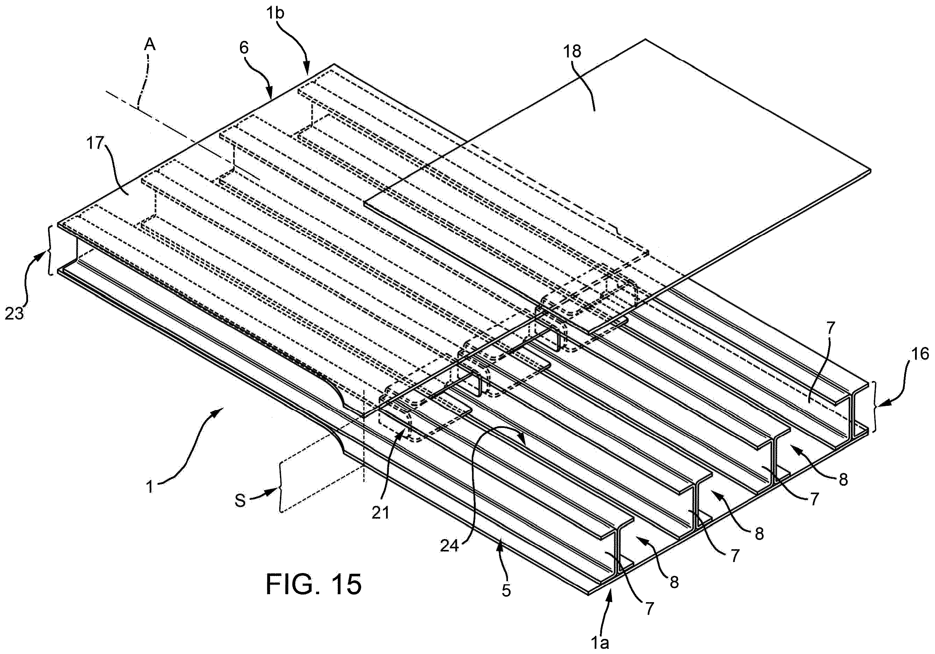

More precisely, each reinforcing element 22 is inserted into the respective cavity 8 in the area of the opening 24 or in the area of the first end 1a and is caused to longitudinally slide (along the axis A) until it reaches the transversal sector S, as schematically shown in figure 15.

Each reinforcing element 22 preferably comprises a back 22a and two winglets 22b (an upper one and a lower one) projecting transversely and, more in particular, orthogonally from the back 22a.

Once the reinforcing elements 22 are inserted, the winglets 22b are coplanar to and in contact with the first wall 5 and the main portion 17, respectively.

Each reinforcing element 22 further includes a pair of side flanges 22c, which are opposite one another and orthogonal to the back 22a and to the winglets 22b.

The flanges 22c are configured to be placed in contact with the flanges 13 of the spars 7, once the rib 21 is in position in the area of the transversal sector S, as shown in figure 15.

Up to this point, the closing portion 18 remains separated from the second assembly 23, as schematically shown in figures 13 to 15. For example, the closing portion 18 remains attached to the third plate 20, on which it was laminated and cured.

This allows the reinforcing elements 22 and, hence, the rib 21 to be inserted in a simple and smooth manner, without having to use probes to view the inside of the finished structure and without the need to drill holes and/or make openings in the finished structure. This results in a significant time saving and in a substantial reduction of assembly errors, thereby improving the quality of the assemblies and avoiding damages to the structure 1.

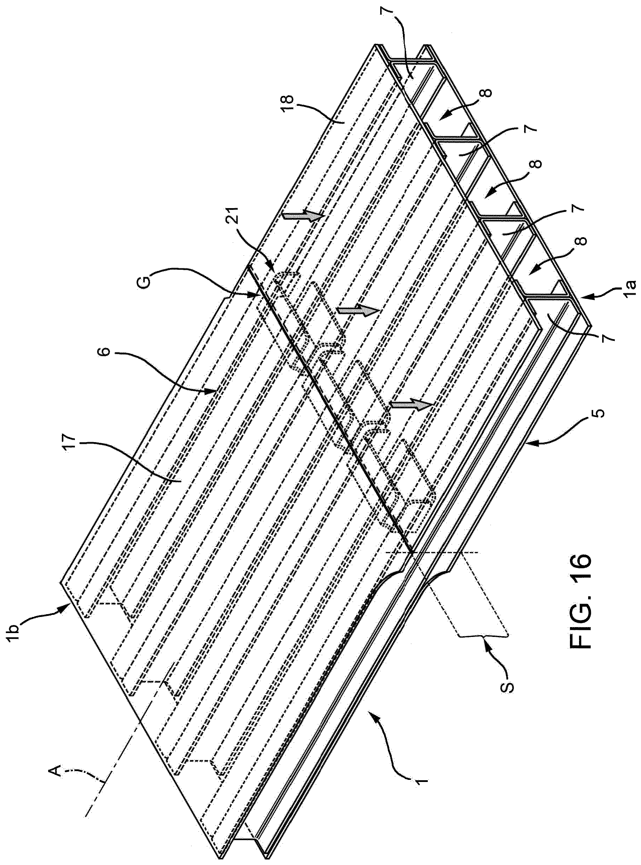

Following the insertion of the rib 21, the method according to the aforementioned first embodiment of the invention then involves (figure 16) placing the closing portion 18 on a third assembly of the structure 1 comprising the second assembly 23 and the reinforcing rib 21, coupling the closing portion 18 to the main portion 17 in such a way that the closing portion 18 extends from the transversal sector S to the other one of said first end 1a and second end 1b (in particular, to the end 1a), so that the closing portion 18 is in contact with the second winglets 14b of the spars 7 and so as to define the remaining part of the second wall 6 for closing the box-shaped structure 1.

In particular, the closing portion 18 is also placed so as to be coplanar to and in contact with the winglets 22b of each reinforcing element 22 constituting the rib 21.

Thus, the rib 21 is simultaneously in contact with both the closing portion 18 and the main portion 17, by means of the (upper) winglets 22b.

In light of the above, the closing portion 18 defines a sort of "cap" portion designed to close the aforementioned opening 24, as schematically shown in figure 16.

The aforementioned placement of the closing portion 18 on the assembly 23 is appropriately carried out subsequent to the aforementioned curing of the fourth plurality 18a of composite material layers on the third plate 20.

In light of the above, the second wall or upper wall 6 is manufactured in two parts separated from one another in the area of the transversal sector S, with the insertion of the rib 21 in the area of said transversal sector S between the placement of the first one of said two parts (the main portion 17) and the placement of the second one of said two parts (the closing portion 18).

Thanks to the method described above, placing the rib 21 inside the structure 1 is easier compared to the case in which the rib is inserted after the construction and the firm and integral coupling of the walls 5 and 6 and of the spars 7.

As shown in figure 16, according to the method described above, the closing portion 18 is arranged laterally adjacent to the main portion 17, so that a joining zone G is defined between them.

Therefore, the method according to the invention entails, following the placement of the closing portion 18, joining the main portion 17 and the closing portion 18 together.

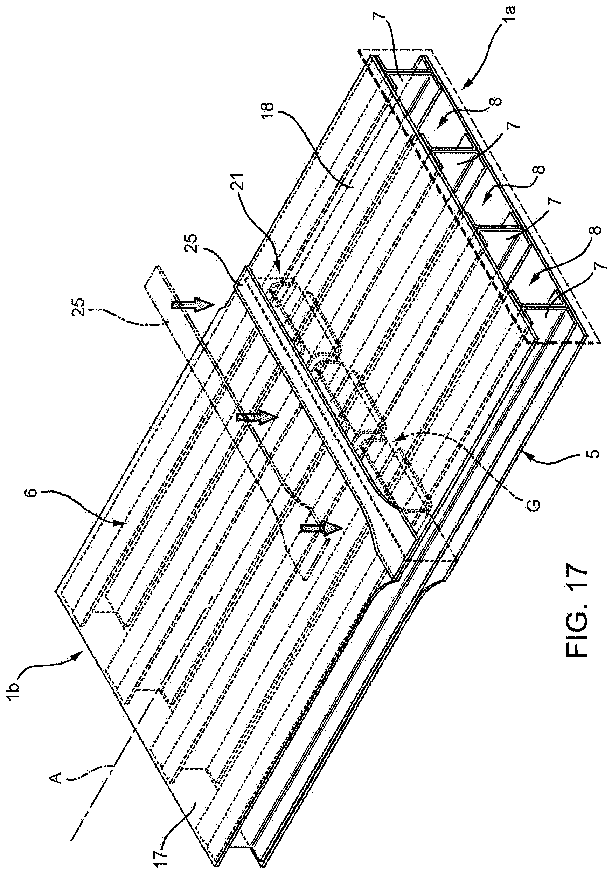

In particular, as schematically shown in figure 17, the method involves placing a splicing body 25 in the area of the transversal sector S and above at least part of the joining zone and so as to overlap (with the interposition of the second wall 6) at least part of the winglets 22b of the elements 22 constituting the rib 21.

In an embodiment, the splicing body 25 is made of metal material.

Once positioned, the splicing body 25 is nailed or riveted to the wall 6, namely to the main portion 17 and to the closing portion 18 (figure 17), joining them.

Appropriately, the splicing body 25 is also nailed or riveted to the winglets 22b lying underneath, so that the rib 21 is fixed in its position in the area of the transversal sector S.

In an alternative embodiment, the splicing body 25 is made of prepreg composite material, for example the same material making up the layers of the aforementioned pluralities of composite material layers.

In this case, the splicing body 25 made of composite material is preferably manufactured and cured separately and then joined as described above.

Alternatively, after the placement of the splicing body 25 in the area of the transversal sector S and above at least part of the joining zone G, the assembly defined by the splicing body 25, the main portion 17 and the closing portion 18 is cured by applying a predetermined temperature and pressure (namely, the splicing body 25 made of composite material is "co-bonded" with the main portion 17 and the closing portion 18 already cured).

Whatever the nature of the splicing body 25, this leads to the creation of the second wall or upper wall 6 in its entirety, by permanently joining the main portion 17 to the closing portion 18.

The box-shaped structure 1 is thus obtained.

Thanks to the configuration in accordance with this first preferred embodiment of the invention, it is possible to obtain a box-shaped structure 1 for a stabilizer 2 of an airplane 4 including a reinforcing rib 21 and devoid of the aforementioned "center box" in a simple and quick manner, thereby strengthening the structure 1 while avoiding introducing excessive complications into the manufacturing process. This results in a significant time saving and in a substantial reduction of assembly errors, thereby improving the quality of the assemblies and avoiding damages to the structure 1. Furthermore, the overall ergonomics of the operators involved in the manufacturing process is improved, thus enhancing their safety.

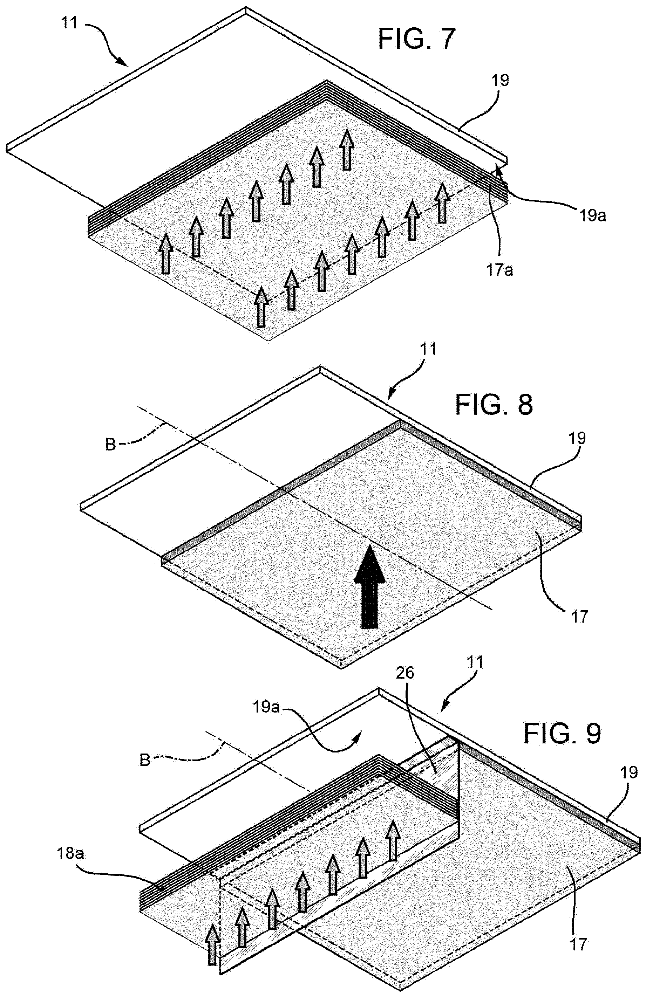

With reference to Figures 7 to 12, a second preferred embodiment of the method according to the invention will be described below.

In particular, only the differences between the method according to the first embodiment and the method according to the second embodiment will be explicitly explained below. Unless expressly indicated, the two methods are to be considered identical.

More in particular, an alternative process for manufacturing the upper wall 6 will be described, in accordance with the aforementioned second embodiment of the invention.

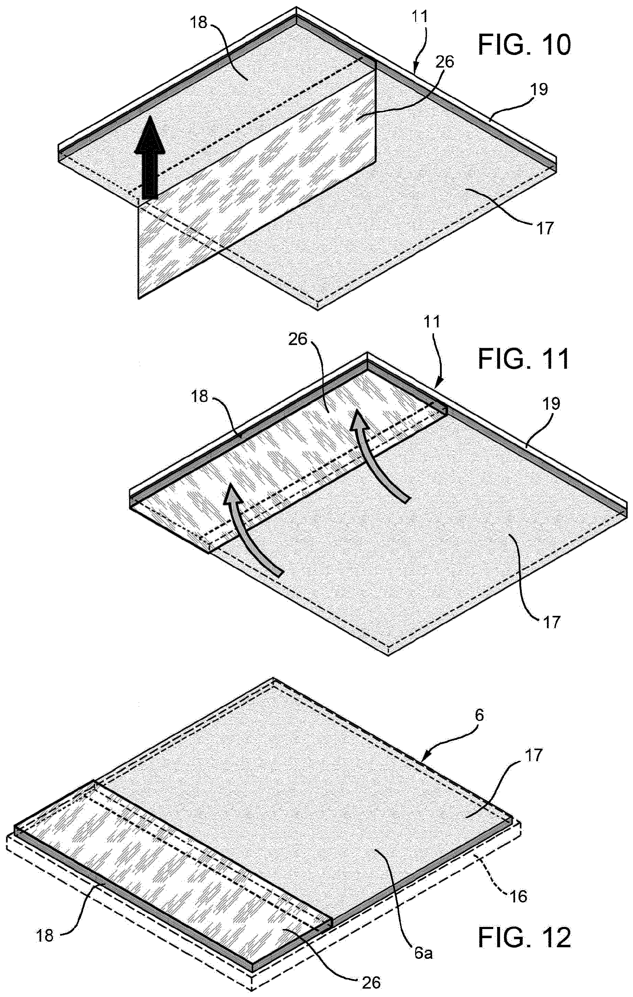

In accordance with said second preferred embodiment, the method according to the invention involves laminating the fourth plurality 18a of layers of prepreg composite material on the aforementioned second forming plate 19, namely on the same plate on which the third plurality 17a of layers constituting the main portion 17 are laminated, so that the main portion 17 and the closing portion 18 are coplanar and adjacent on the second plate 19 (figure 12).

Preferably, the second plate 19 has a longitudinal axis B.

More precisely, according to the second embodiment of the invention, the following operational steps are carried out one after the other:
- the layers of the third plurality 17a are laminated on the second plate 19 (figure 7), so as to form the main portion 17 on the second plate 19 (figure 8) starting from one of the axial ends of the second plate 19 up to a certain axial coordinate relative to the axis B interposed between the axial ends of the second plate 19;
- a separator film 26, for example a film made of Teflon material, is placed on the second plate 19 next to the previously laminated main portion 17 (figure 9) and in the area of the aforementioned axial coordinate and so that said separator film 26 extends transversely from a lamination surface 19a of the second plate 19;
- the layers of the fourth plurality 18a are laminated on the second plate 19, starting from the separator film 26 and starting from the axial coordinate towards the other one of said axial ends and so that the separator film 26 is interposed between the main portion 17 and the closing portion 18 (figures 9 and 10);

- the separator film 26 is folded onto the previously laminated closing portion 18, so as to cover the external surface thereof (namely, the surface opposite the second plate 19), as shown in figure 11;
- the main portion 17 and the closing portion 18 are simultaneously cured by applying, in a known manner that is not described in detail, a predetermined temperature and pressure to said third 17a and fourth 18a plurality of layers previously laminated on the second plate 19.

Preferably, part of the separator film 26 is also folded so that at least a part thereof is interposed between the second plate 19 and the laminated closing portion 18, so as to prevent possible resin movements from the main portion 17 to the closing portion 18 from somehow causing an undesired "sticking" of the layers of the closing portion 18 during the lamination.

Preferably, the aforementioned curing of the main portion 17 and of the closing portion 18 is carried out after having placed the main portion 17 and the closing portion 18 on the aforementioned first assembly 16 (as schematically shown in figure 12), so that the external surfaces (namely, the surfaces opposite the second plate 19) of said portions 17, 18 are in contact with the second winglets 14b of the spars 7.

More in detail, the main portion 17 and the closing portion 18 have dimensions that are such that, once placed on the first assembly 16, the main portion 17 extends from the second end 1b to the transversal sector S and the closing portion 18 extends from the transversal sector S to the first end 1a.

During this curing step, the tools 15 remain inside the forming mold 11, as already explained in accordance with the first embodiment.

The tools 15 are preferably removed once the curing step has ended.

Once the aforementioned curing is carried out, the method according to the second preferred embodiment involves decoupling the closing portion 18 from the main portion 17 and from the spars 7, using the separator film 26, thus defining the aforementioned opening 24.

Indeed, thanks to the presence of the separator film 26, the closing portion 18 can easily be separated from the main portion 17 and from the spars 7, even though it has been cured together with these components (which, together with the first wall 5, define the aforementioned second assembly 23).

Following the temporary decoupling of the closing portion 18, the aforementioned procedure for inserting the rib 21 is carried out (figures 14 and 15).

After that, the closing portion 18 is again positioned so as to cover the opening 24, obtaining the box-shaped structure 1 with the rib 21 on the inside (figure 16).

Subsequently, the aforementioned final permanent joining of the main portion 17 to the closing portion 18 is carried out using the splicing body 25 (figure 17).

Thanks to the configuration in accordance with the second embodiment of the invention, it is possible to obtain a structure 1 with minimal tolerance errors, despite a slightly more complex lamination compared to the previously described case.

Indeed, since the main portion 17, the closing portion 18 and the spars 7 are cured together, the shape coupling between the spars 7 and said portions 17 and 18 and between the portions 17 and 18 themselves is more precise than in the previously described case

In fact, the main portion 17 and the closing portion 18, for they are laminated on the same tool (i.e. the second plate 19), fit optimally compared to the case in which they are laminated on two distinct plates (as in the previous case), despite a slightly more complex lamination compared to the previously described case.

Based on the above description, the method according to the invention (both in accordance with the first embodiment and in accordance with the second embodiment) results in a box-shaped structure for fuselages and aircraft wings and, in particular, for a horizontal stabilizer, which is made of a fiber-reinforced polymer matrix prepreg composite material, said structure having a longitudinal axis, extending longitudinally between a first axial end and a second axial end, and comprising:
- a first longitudinal wall;
- a second longitudinal wall facing the first wall and spaced apart from the first wall by a non-zero amount;
- a plurality of spars extending longitudinally and transversely between said first wall and second wall, connected to them and delimiting, with the first wall and the second wall, respective longitudinal cavities; and
- a reinforcing rib including a series of transversal reinforcing elements, each inserted in one of said cavities and between two adjacent spars, the transversal elements being aligned with one another transversely to said longitudinal axis and in the area of a transversal sector of said box-shaped structure interposed between said first axial end and second axial end;
wherein the second wall comprises a main portion and a closing portion coplanar to one another and defining two distinct pieces with discontinuity and separated from one another in the area of said transversal sector.

Preferably, the closing portion is coupled to the main portion by means of a splicing body;
said splicing body is simultaneously nailed or riveted to the main portion and to the closing portion.

Alternatively, the splicing body is made of a prepreg composite material and is manufactured and cured separately or cured in co-bonding with the main portion 17 and the closing portion 18 already cured, as described above.

The features of method for manufacturing the structure 1 and of the structure 1 according to the invention reveal evident advantages that can be obtained with them.

In particular, it is possible to obtain a box-shaped structure 1 for a stabilizer 2 of an airplane 4 including a reinforcing rib 21 and devoid of the aforementioned "center box" in a simple and quick manner, thereby strengthening the structure 1 while avoiding introducing excessive complications into the manufacturing process.

Indeed, thanks to the manufacturing method according to the invention, it is not necessary to carry out complicated, expensive and lengthy processes of detection and/or measurement of the inside of the finished box-shaped structure.

Moreover, it is not necessary to make holes, openings or the like in the finished structure to carry out assembly operations in general or to insert detection probes and reinforcing elements, as these are inserted before the placement and the final joining of the closing portion 18.

Therefore, the method according to the invention results in a significant time saving and in a substantial reduction of assembly errors, thereby improving the quality of the assemblies and avoiding damages to the structure 1. Furthermore, the overall ergonomics of the operators involved in the manufacturing process is improved, thus enhancing their safety (as no additional holes and/or openings have to be made in the finished structure 1, tools designed for this purpose are not required).

Therefore, thanks to the method and the structure 1 according to the invention, the elimination of the "center box" and the replacement thereof with a simple beam-like joining element, for example a relatively thin double T-section profile, are easier and more simple to be carried out, besides not introducing structural critical elements within the stabilizer 2.

To this regard, it should be pointed out that the assembly of said beam-like joining element (schematically shown in figure 1) can easily be carried out before the placement and the final coupling of the closing portion 18. Alternatively, this assembly of the beam-like joining element is carried out following the final coupling of the closing portion 18.

In light of the above, the structure 1 can be elongated along the longitudinal axis A to compensate for the material loss resulting from the removal of the "center box", however without introducing excessive complications into the manufacturing process of the stabilizer 2.

Furthermore, the presence of rib 21 allows manufacturers to provide, in the area of the transversal sector S, control systems (for example, pneumatic, hydraulic or electric pistons) for the inclination of stabilizer 2, which are known per se and are not shown or described in detail. This configuration allows some of the stresses arising from the aforementioned control systems to be offloaded onto the structure 1 and, in particular, onto the reinforcing rib 21, thereby improving the structural properties and the resistance to stresses of the structure 1.

Therefore, the closing portion 18 defines a sort of structural "cap", through which the loads and stresses exerted, in use, upon the stabilizer 2 pass and are distributed.

The method and the structure 2 disclosed and shown herein can be subjected to changes and variants, without for this reason going beyond the scope of protection set forth in the appended claims.

## Claims

1. Method for manufacturing a box-shaped structure (1) for aircrafts (4), and in particular for a horizontal stabilizer (2), using a fiber-reinforced polymer matrix prepreg composite material, said structure (1) having a longitudinal axis (A), extending longitudinally between a first axial end (1a) and a second axial end (1b), and comprising:
- a first longitudinal wall (5);
- a second longitudinal wall (6) facing the first wall (5) and arranged spaced from the first wall (5) itself by a non-zero amount; and
- a plurality of spars (7) extending longitudinally and between said first wall (5) and second wall (6), connected to these latter and delimiting with the first wall (5) and the second wall (6) respective longitudinal cavities (8);
said method comprising the steps of:
a) laminating a first plurality of layers of said prepreg composite material on a first forming plate (10) of a forming mold (11), so as to form a first skin (5a) in composite material defining said first wall (5);
b) arranging a plurality of elongated support tools (15) each having a cross section with a polygonal external profile complementary to the profile of the longitudinal cavities (8) to be formed in said structure (1);
c) laminating a second plurality of layers of said prepreg composite material on three contiguous walls of each support tool (15), so as to obtain elongated profiles (12) made in said composite material, each profile (12) having a C-shaped cross section and comprising a flange (13) and two winglets (14) projecting transversely from the flange (13);
d) joining said profiles (12) two by two along the respective flanges (13) adjoining side by side respective pairs of support tools (15) so that the profiles (12) themselves have opposite concavities, so as to obtain said spars (7);
e) longitudinally arranging the adjoined support tools (15) and the previously obtained spars (7) on the previously obtained first wall (5), in such a way that respective first winglets (14a) of the spars (7) are coplanar in contact with said first wall (5), thus defining a first assembly (16) of said structure (1);
f) laminating a third plurality (17a) of layers of said prepreg composite material on a second forming plate (19) of said forming mold (11), so as to form a main portion (17) of a second skin (6a) in composite material, which second skin (6a) defines said second wall (6);
g) laminating a fourth plurality (18a) of layers of said prepreg composite material on said second plate (19) or on a third forming plate (20) of said forming mold (11) separate and distinct from the second plate (19), so as to form a closing portion (18) of said second skin (6a) distinct and separate from said main portion (17) and couplable to the main portion (17) itself to define said second wall (6);
h) placing at least said main portion (17) on said first assembly (16) so that the main portion (17) is in contact with respective second winglets (14b) of the spars (7) opposite said first winglets (14a), so as to define part of said second wall (6) extending from one of said first axial end (1a) or second axial end (1b) up to a predetermined transversal sector (S) of the box-shaped structure (1) axially interposed between said first axial end (1a) and second axial end (1b), relative to said longitudinal axis (A), the group comprising the first assembly (16) and the main portion (17) defining a second assembly (23) of said box-shaped structure (1);
i) after the step h) of placing, inserting in said cavities (8) and between said spars (7) a series of transversal reinforcing elements (22), aligned with one another transversally to said longitudinal axis (A) and at said transversal sector (S), for defining a reinforcing rib (21) of said box-shaped structure (1) arranged at said transversal sector (S);
l) after step i) of inserting, placing said closing portion (18) on a third assembly of said box-shaped structure (1) comprising the second assembly (23) and the reinforcing rib (21), coupling the closing portion (18) to the main portion (17) in such a way that the closing portion (18) extends from said transversal sector (S) to the other of said first axial end (1a) or second axial end (1b), so that the closing portion (18) is in contact with said second winglets (14b) of the spars (7) and so as to define the remaining part of said second wall (6) for closing the box-shaped structure (1).

2. Method as claimed in claim 1, and further comprising the step of:
m) after the step h) of placing the main portion, curing said second assembly (23) by applying predetermined temperature and pressure to the first plurality, second plurality and third plurality (17a) of respectively laminated layers of composite material.

3. Method as claimed in claim 2, wherein said step g) of laminating the fourth plurality of layers is performed on said third forming plate (20) separate and distinct from the second forming plate (19);
and wherein the method also comprises the step of:
n) curing said closing portion (18) by applying predetermined temperature and pressure to said fourth plurality (18a) of layers previously laminated on said third forming plate (20).

4. Method as claimed in claim 3, wherein said step 1) of placing the closing portion (18) is performed subsequently to the step n) of curing the closing portion (18).

5. Method as claimed in claim 1, wherein said step g) of laminating the fourth plurality of layers is performed on said second forming plate (19), so that the main portion (17) and the closing portion (18) are arranged coplanar and adjacent on the second forming plate (19) itself;
and wherein the method also includes the steps of:
o) providing a separator film (26), for example a film of Teflon-coated material, between the main portion (17) and the closing portion (18);
p) covering the outer surface of the previously laminated closing portion (18) with said separator film (26);
q) after the steps f) of laminating the third plurality of layers, g) of laminating the fourth plurality of layers and p) of covering, simultaneously curing the main portion (17) and the closing portion (18) together by applying predetermined temperature and pressure to said third (17a) and fourth (18a) plurality of previously laminated layers.

6. Method as claimed in claim 5, and further comprising the steps of:
r) after the step p) of covering and before step q) of curing, placing said main portion (17) and closing portion (18) on said first assembly (16), in such a way that the respective outer surfaces of said main portion (17) and closure portion (18) are in contact with said second winglets (14b) of the spars (7);
s) after the step r) of placing, carrying out said step q) of curing;
t) decoupling the closed portion (18) from the main portion (17) and from the spars (7), by means of said separator film (26);
u) after the step t) of decoupling the closing portion, carry out the steps i) of inserting the reinforcing elements (22) and 1) of placing the closing portion (18).

7. Method as claimed in any of the preceding claims, wherein the step 1) of placing the closing portion is performed by arranging the closing portion (18) laterally adjacent to the main portion (17), such that a joining region (G) is defined between them;
and wherein which the method also comprises the step of:
v) after the step 1) of placing the closing portion, joining the main portion (17) and the closing portion (18) together.

8. Method as claimed in claim 7, wherein the step v) of joining comprises:
- arranging a splicing body (25) at said transversal sector (S) and above the joining region (G);
- nailing or riveting the splicing body (25) to the main portion (17) and to the closing portion (18).

9. Method as claimed in claim 7, wherein the step v) of joining comprises:
- arranging a splicing body (25) made of prepreg composite material at said transversal sector (S) and above the joining region (G).

10. Method as claimed in claim 2, wherein:
- said support tools (15) are internally hollow and have a composition based on reinforcing material and polymer apt to allow the transition from a rigid state to a flexible elastomeric state and vice-versa in response to a heating action and respectively to a cooling action;
- said support tools (15) are configured to assume the flexible elastomeric state at a temperature lower than the curing temperature and higher than 50°C;
- the step c) is performed by directly laminating the prepreg material constituting said second plurality of layers on the outer surface of the walls of said support tools (15) while these latter are in their rigid state; and
- during step m) of curing said second assembly, the curing pressure is applied both inside the forming mold (11) and inside the support tools (15), the walls of which are made flexible by the passage from the rigid state to the flexible elastomeric state and are therefore pushed by the curing pressure itself to adhere to said sections (12), to said first wall (5) and at least to said main portion (17).

11. Method as claimed in claim 10, wherein the polymer of said support tools (15) is a shape memory thermosetting or thermoplastic polymer;
and/or wherein the reinforcing material of said support tools (15) includes one or more elastic fibres.

12. Method as claimed in claim 2, wherein said support tools (15) are defined by rigid elements which are non-deformable in response to heating and cooling respectively;
wherein the method further comprises, prior to the steps c) of laminating, e) of arranging and m) of curing, the successive steps of:
z1) applying on each support tool (15) a layer of separating agent to facilitate the subsequent extraction of the support tool itself from the respective cavity (8);
z2) fitting a tubular bag onto each support tool (15) so prepared, leaving an excess of the tubular bag at each end of the support tool (15) itself for a subsequent sealing operation;
z3) wrapping a ventilation fabric on each support tool (15) and on the outside of the tubular bag, fixing the edges with a sealant;
z4) fitting a tubular separator film onto each support tool (15) so prepared, leaving an excess of the separator film at each end of the support tool (15) itself for the subsequent sealing operation;
z5) sealing the ends of the tubular bag and of the tubular separator film using a sealant;
z6) applying the vacuum and waiting for the tubular separator film to tighten the entire so prepared coating on the relative support tool.

13. Method as claimed in claim 12, and further comprising the steps of:
y) after the step z6) of applying the vacuum, arranging in succession around the second assembly (23) a separator film, a ventilation fabric and an outer bagging film;
w) sealing the outer bagging film, so that the second assembly (23) is housed inside it;
x) applying vacuum inside the outer bagging film until the material of the outer bagging film tightens against the outer surfaces of the second assembly (23);
and wherein the aforementioned predetermined pressure and temperature relating to the step m) of curing are applied inside the outer bagging film and inside each said tubular bag.

14. Box-shaped structure (1) for aircrafts (4), and in particular for a horizontal stabilizer (2), made of a fiber-reinforced polymer matrix prepreg composite material, said structure (1) having a longitudinal axis (A), extending longitudinally between a first axial end (1a) and a second axial end (1b), and comprising:
- a first longitudinal wall (5);
- a second longitudinal wall (6) facing the first wall (5) and arranged spaced from the first wall (5) itself by a non-zero amount;
- a plurality of spars (7) extending longitudinally and between said first wall (5) and second wall (6), connected to them and delimiting with the first wall (5) and the second wall (6) respective longitudinal cavities (8); and
- a reinforcing rib (21) including a series of transversal reinforcing elements (22) inserted, each, in one of said cavities (8) and between two said adjacent spars (7), the transversal elements (22) being aligned between them transversely to said longitudinal axis (A) and at a transversal sector (S) of said box-shaped structure (1) interposed between said first axial end (1a) and second axial end (1b);
wherein the second wall (6) comprises a main portion (17) and a closing portion (18) coplanar with one another and defining two distinct pieces with solution of continuity and separated at said transversal sector (S).

15. Structure as claimed in claim 14, wherein the closing portion (18) is coupled to the main portion (17) by means of a splicing body (25),
and wherein said splicing body (25) is nailed or riveted simultaneously to the main portion (17) and to the closing portion (18).

## Patentansprüche

1. Verfahren zur Herstellung einer kastenförmigen Struktur (1) für Flugzeuge (4) und insbesondere für ein Höhenleitwerk (2) unter Verwendung eines faserverstärkten Polymermatrix-Prepreg-Verbundmaterials, wobei die Struktur (1) eine Längsachse (A) hat, die sich zwischen einem ersten axialen Ende (1a) und einem zweiten axialen Ende (1b) längs erstreckt, und aufweist:
- eine erste Längswand (5);
- eine zweite Längswand (6), die der ersten Wand (5) zugewandt ist und von der ersten Wand (5) selbst um eine Größe ungleich null beabstandet ist; und
- mehrere Holme (7), die sich längs und zwischen der ersten Wand (5) und der zweiten Wand (6) erstrecken, mit diesen letzteren verbunden sind und mit der ersten Wand (5) und der zweiten Wand (6) jeweilige Längshohlräume (8) begrenzen;
wobei das Verfahren die folgenden Schritte aufweist:
a) Laminieren mehrerer erster Schichten des Prepreg-Verbundmaterials auf eine erste Formplatte (10) einer Ausbildungsform (11), um eine erste Haut (5a) in dem Verbundmaterial, welche die erste Wand (5) definiert, auszubilden;
b) Anordnen mehrerer länglicher Haltewerkzeuge (15), von denen jedes einen Querschnitt mit einem polygonalen Außenprofil hat, das komplementär zu dem Profil der Längshohlräume (8) ist, die in der Struktur (1) ausgebildet werden sollen;
c) Laminieren mehrerer zweiter Schichten des Prepreg-Verbundmaterials auf drei zusammenhängende Wände jedes Haltewerkzeugs (15), um aus dem Verbundmaterial hergestellte längliche Profile (12) zu gewinnen, wobei jedes Profil (12) einen C-förmigen Querschnitt hat und einen Flansch (13) und zwei Winglets (14), die quer von dem Flansch (13) vorstehen, aufweist;
d) paarweises Aneinanderfügen der Profile (12) entlang der jeweiligen Flansche (13), wobei jeweilige Paare von Haltewerkzeugen (15) aneinandergrenzen, so dass die Profile (12) selbst entgegengesetzte Hohlräume haben, um die genannten Holme (7) zu gewinnen;
e) Längsanordnen der aneinandergefügten Haltewerkzeuge (15) und der vorher gewonnenen Holme (7) auf der vorher gewonnenen ersten Wand (5) in einer derartigen Weise, dass jeweilige erste Winglets (14a) der Holme (7) komplanar in Kontakt mit der ersten Wand (5) sind, wobei auf diese Weise eine erste Anordnung (16) der Struktur (1) definiert wird;
f) Laminieren mehrerer dritter (17) Schichten des Prepreg-Verbundmaterials auf eine zweite Formplatte (19) der Ausbildungsform (11), um einen Hauptabschnitt (17) einer zweiten Haut (6a) aus Verbundmaterial auszubilden, wobei die zweite Haut (6a) der zweiten Wand (6) zugewandt ist;
g) Laminieren mehrerer vierter (18a) Schichten des Prepreg-Verbundmaterials auf die zweite Platte (19) oder auf eine dritte Formplatte (20) der Ausbildungsform (11) getrennt und verschieden von der zweiten Platte (19), um einen Schließabschnitt (18) der zweiten Haut (6a) verschieden und getrennt von dem Hauptabschnitt (17) zu bilden, der mit dem Hauptabschnitt (17) selbst koppelbar ist, um die zweite Wand (6) zu definieren;
h) Anordnen wenigstens des Hauptabschnitts (17) auf der ersten Anordnung (16), so dass der Hauptabschnitt (17) mit jeweiligen zweiten Winglets (14b) der Holme (7) entgegengesetzt zu den ersten Winglets (14a) in Kontakt ist, um einen Teil der zweiten Wand (6) zu definieren, der sich von dem ersten axialen Ende (1a) oder dem zweiten axialen Ende (1b) bis zu einem vorgegebenen Quersektor (S) der kastenförmigen Struktur (1) erstreckt, welcher relativ zu der Längsachse (A) axial zwischen dem ersten axialen Ende (1a) und dem zweiten axialen Ende (1b) eingefügt ist, wobei die Gruppe die erste Anordnung (16) und den Hauptabschnitt (17), die eine zweite Anordnung (23) der kastenförmigen Struktur (1) definieren, aufweist;
i) nach dem Anordnungsschritt h) Einfügen einer Reihe von Querverstärkungselementen (22), die quer zu der Längsachse (A) miteinander ausgerichtet sind, in die Hohlräume (8) und zwischen die Holme (7) an dem Quersektor (S), um eine Verstärkungsrippe (21) der kastenförmigen Struktur (1), die an dem Quersektor (S) eingerichtet ist, zu definieren;
l) nach dem Einfügeschritt i) Anordnen des Schließabschnitts (18) auf einer dritten Anordnung der kastenförmigen Struktur (1), welche die zweite Anordnung (23) und die Verstärkungsrippe (21) aufweist, wobei der Schließabschnitt (18) in einer derartigen Weise mit dem Hauptabschnitt (17) gekoppelt wird, dass der Schließabschnitt (18) sich von dem Quersektor (S) zu dem anderen des ersten axialen Endes (1a) oder des zweiten axialen Endes (1b) erstreckt, so dass der Schließabschnitt (18) in Kontakt mit den zweiten Winglets (14b) der Holme (7) ist, und um den verbleibenden Teil der zweiten Wand (6) zum Schließen der kastenförmigen Struktur (1) zu definieren.

2. Verfahren nach Anspruch 1, das ferner den folgenden Schritt aufweist:
m) nach dem Schritt h) des Anordnens des Hauptabschnitts Härten der zweiten Anordnung (23) durch Anwenden einer vorgegebenen Temperatur und eines Drucks auf die mehreren ersten, mehreren zweiten und mehreren dritten (17a) jeweiliger laminierter Schichten aus Verbundmaterial.

3. Verfahren nach Anspruch 2, wobei der Schritt g) des Laminierens der mehreren vierten Schichten auf der dritten Formplatte (20) getrennt und verscheiden von der zweiten Formplatte (19) durchgeführt wird;
und wobei das Verfahren auch den folgenden Schritt aufweist:
n) Härten des Schließabschnitts (18) durch Anwenden einer vorgegebenen Temperatur und eines Drucks auf die vorher auf die dritte Formplatte (20) laminierten mehreren vierten (18a) Schichten.

4. Verfahren nach Anspruch 3, wobei der Schritt l) des Anordnens des Schließabschnitts (18) anschließend an den Schritt n) des Härtens des Schließabschnitts (18) durchgeführt wird.

5. Verfahren nach Anspruch 1, wobei der Schritt g) des Laminierens der mehreren vierten Schichten auf die zweite Formplatte (19) durchgeführt wird, so dass der Hauptabschnitt (17) und der Schließabschnitt (18) komplanar und benachbart auf der zweiten Formplatte (19) selbst eingerichtet werden;
und wobei das Verfahren auch die folgenden Schritte umfasst:
o) Bereitstellen einer dünnen Trennschicht (26), zum Beispiel einer dünnen Schicht aus Teflon-beschichtetem Material, zwischen dem Hauptabschnitt (17) und dem Schließabschnitt (18);
p) Bedecken der Außenoberfläche des vorher laminierten Schließabschnitts (18) mit der dünnen Trennschicht (26);
q) nach den Schritten f) des Laminierens der mehreren dritten Schichten, g) des Laminierens der mehreren vierten Schichten und p) des Bedeckens gleichzeitiges gemeinsames Härten des Hauptabschnitts (17) und des Schließabschnitts (18) durch Anwenden einer vorgegebenen Temperatur und eines Drucks auf die mehreren dritten (17a) und vierten (18a) vorher laminieren Schichten.

6. Verfahren nach Anspruch 5, das ferner die folgenden Schritte aufweist:
r) nach dem Schritt p) des Bedeckens und vor dem Härteschritt q) Anordnen des Hauptabschnitts (17) und des Schließabschnitts (18) in einer derartigen Weise auf der ersten Anordnung (16), dass die jeweiligen Außenoberflächen des Hauptabschnitts (17) und des Schließabschnitts (18) in Kontakt mit den zweiten Winglets (14b) der Holme (7) sind;
s) nach dem Anordnungsschritt r) Ausführen des Härteschritts q);
t) Entkoppeln des Schließabschnitts (18) von dem Hauptabschnitt (17) und von den Holmen (7) mit Hilfe der dünnen Trennschicht (26);
u) nach dem Schritt t) des Entkoppelns des Schließabschnitts Ausführen der Schritte i) des Einfügens der Verstärkungselemente (22) und l) des Anordnens des Schließabschnitts (18).

7. Verfahren nach einem der vorhergehenden Ansprüche, wobei der Schritt l) des Anordnens des Schließabschnitts durchgeführt wird, indem der Schließabschnitt (18) seitlich benachbart zu dem Hauptabschnitt (17) eingerichtet wird, so dass ein aneinander gefügter Bereich (G) zwischen ihnen definiert wird;
und wobei das Verfahren auch den folgenden Schritt aufweist:
v) nach dem Schritt 1) des Anordnens des Schließabschnitts Aneinanderfügen des Hauptabschnitts (17) und des Schließabschnitts (18).

8. Verfahren nach Anspruch 7, wobei der Aneinanderfügeschritt v) aufweist:
- Einrichten eines Spleißungskörpers (25) an dem Quersektor (S) und oberhalb des aneinandergefügten Bereichs (G);
- Nageln oder Nieten des Spleißungskörpers (25) an den Hauptabschnitt (17) und an den Schließabschnitt (18).

9. Verfahren nach Anspruch 7, wobei der Aneinanderfügeschritt v) aufweist:
- Einrichten eines aus Prepreg-Verbundmaterial hergestellten Spleißungskörpers (25) an dem Quersektor (S) und oberhalb des aneinandergefügten Bereichs (G).

10. Verfahren nach Anspruch 2, wobei:
- die Haltewerkzeuge (15) innen hohl sind und eine Zusammensetzung basierend auf Verstärkungsmaterial und Polymer haben, die geeignet ist, ansprechend auf eine Heiztätigkeit bzw. auf eine Kühltätigkeit den Übergang von einem starren Zustand in einen flexiblen elastomeren Zustand und umgekehrt zu ermöglichen;
- die Haltewerkzeuge (15) konfiguriert sind, um bei einer Temperatur, die niedriger als die Härtetemperatur und höher als 50°C ist, den flexiblen elastomeren Zustand anzunehmen;
- der Schritt c) durchgeführt wird, indem das Prepreg-Material, das die mehreren zweiten Schichten bildet, direkt auf die Außenoberfläche der Wände der Haltewerkzeuge (15) laminiert wird, während die letzteren in ihrem starren Zustand sind; und
- während dem Härteschritt m) der zweiten Anordnung der Härtungsdruck sowohl im Inneren der Ausbildungsform (11) als auch im Inneren der Haltewerkzeuge (15) angewendet wird, deren Wände durch den Übergang von dem starren Zustand in den flexiblen elastomeren Zustand flexibel gemacht werden und daher durch den Härtungsdruck selbst gedrückt werden, so dass sie an den genannten Abschnitten (12), an der ersten Wand (5) und wenigstens an dem Hauptabschnitt (17) haften.

11. Verfahren nach Anspruch 10, wobei das Polymer der Haltewerkzeuge (15) ein wärmehärtendes Polymer mit Formgedächtnis oder ein thermoplastisches Polymer ist;
und/oder wobei das Verstärkungsmaterial der Haltewerkzeuge (15) eine oder mehr elastische Fasern umfasst.

12. Verfahren nach Anspruch 2, wobei die Haltewerkzeuge (15) durch starre Elemente definiert sind, die jeweils ansprechend auf Heizen und Kühlen nicht verformbar sind;
wobei das Verfahren ferner vor den Schritten c) des Laminierens, e) des Einrichtens und m) des Härtens die folgenden aufeinanderfolgenden Schritte aufweist:
z1) Aufbringen einer Schicht aus Trennmittel auf jedes Haltewerkzeug (15), um die anschließende Extraktion des Haltewerkzeugs selbst aus dem jeweiligen Hohlraum (8) zu erleichtern;
z2) Anpassen eines schlauchförmigen Beutels auf jedes derart hergestellte Haltewerkzeug (15), wobei ein Überschuss des schlauchförmigen Beutels an jedem Ende des Haltewerkzeugs (15) selbst für eine anschließende Abdichtungstätigkeit gelassen wird;
z3) Wickeln eines Lüftungsgewebes auf jedes Haltwerkzeug (15) und auf das Äußere des schlauchförmigen Beutels, wobei die Ränder mit einem Dichtungsmittel fixiert werden;
z4) Anpassen einer schlauchförmigen dünnen Trennschicht auf jedem derart hergestellten Haltewerkzeug (15), wobei ein Überschuss der dünnen Trennschicht an jedem Ende des Haltewerkzeugs (15) selbst für die anschließende Abdichtungstätigkeit gelassen wird;
z5) Abdichten der Enden des schlauchförmigen Beutels und der schlauchförmigen Trennschicht unter Verwendung eines Dichtungsmittels;
z6) Anwenden des Vakuums und Warten, bis die schlauchförmige Trennschicht die gesamte derart hergestellte Beschichtung auf dem jeweiligen Haltewerkzeug spannt.

13. Verfahren nach Anspruch 12, das ferner die folgenden Schritte aufweist:
y) nach dem Schritt z6) der Vakuumanwendung nacheinander Einrichten einer dünnen Trennschicht, eines Lüftungsgewebes und einer dünnen äußeren Beutelschicht um die zweite Anordnung (23) herum;
w) Abdichten der dünnen äußeren Beutelschicht, so dass die zweite Anordnung (23) im Inneren davon untergebracht ist;
x) Anwenden von Vakuum im Inneren der dünnen äußeren Beutelschicht, bis das Material der dünnen äußeren Beutelschicht gegen die Außenoberflächen der zweiten Anordnung (23) spannt;
und wobei der vorstehend erwähnte vorgegebene Druck und die Temperatur, die den Härteschritt m) betreffen, im Inneren der dünnen äußeren Beutelschicht und im Inneren jedes schlauchförmigen Beutels angewendet werden.

14. Kastenförmige Struktur (1) für Flugzeuge (4), und insbesondere für ein Höhenleitwerk (2), die aus einem faserverstärkten Polymermatrix-Prepreg-Verbundmaterial hergestellt ist, wobei die Struktur (1) eine Längsachse (A) hat, die sich zwischen einem ersten axialen Ende (1a) und einem zweiten axialen Ende (1b) längs erstreckt, und die aufweist:
- eine erste Längswand (5);
- eine zweite Längswand (6), die der ersten Wand (5) zugewandt ist und von der ersten Wand (5) selbst um eine Größe ungleich null beabstandet ist; und
- mehrere Holme (7), die sich längs und zwischen der ersten Wand (5) und der zweiten Wand (6) erstrecken, mit diesen verbunden sind und mit der ersten Wand (5) und der zweiten Wand (6) jeweilige Längshohlräume (8) begrenzen;
- eine Verstärkungsrippe (21), die eine Reihe von Querverstärkungselementen (22) umfasst, die jeweils in einen der Hohlräume (8) und zwischen den zwei benachbarten Holmen (7) eingesetzt sind, wobei die Querelemente (22) untereinander quer zu der Längsachse (A) und an einem Quersektor (S) der kastenförmigen Struktur (1), der zwischen dem ersten axialen Ende (1a) und dem zweiten axialen Ende (1b) eingefügt ist, ausgerichtet sind;
wobei die zweite Wand (6) einen Hauptabschnitt (17) und einen Schließabschnitt (18) aufweist, die miteinander komplanar sind und zwei unterschiedliche Stücke mit Unterbrechung der Stetigkeit, die an dem Quersektor (S) getrennt sind, definieren.

15. Struktur nach Anspruch 14, wobei der Schließabschnitt (18) mit Hilfe eines Spleißungskörpers (25) mit dem Hauptabschnitt (17) gekoppelt ist,
und wobei der Spleißungskörper (25) gleichzeitig an den Hauptabschnitt (17) und an den Schließabschnitt (18) genagelt oder genietet ist.

## Revendications

1. Procédé de fabrication d'une structure en forme de caisson (1) pour aéronefs (4), et en particulier pour un stabilisateur horizontal (2), en utilisant un matériau composite préimprégné à matrice polymère renforcée en fibres, ladite structure (1) ayant un axe longitudinal (A), s'étendant longitudinalement entre une première extrémité axiale (1a) et une deuxième extrémité axiale (1b), et comprenant :
une première paroi longitudinale (5) ;
une deuxième paroi longitudinale (6) faisant face à la première paroi (5) et agencée espacée de la première paroi (5) elle-même selon une quantité non nulle ; et
une pluralité de longerons (7) s'étendant longitudinalement et entre ladite première paroi (5) et la deuxième paroi (6), raccordés à ces dernières et délimitant avec la première paroi (5) et la deuxième paroi (6), des cavités longitudinales (8) respectives ;
ledit procédé comprenant les étapes de :
a) stratification d'une première pluralité de couches dudit matériau composite préimprégné sur une première plaque de formage (10) d'un moule de formage (11), afin de former une première peau (5a) en matériau composite définissant ladite première paroi (5) ;
b) disposition d'une pluralité d'outils de support allongés (15) ayant chacun une section transversale à profil externe polygonal complémentaire du profil des cavités longitudinales (8) à former dans ladite structure (1) ;
c) stratification d'une deuxième pluralité de couches dudit matériau composite préimprégné sur trois parois contiguës de chaque outil de support (15), pour obtenir des profils allongés (12) dans ledit matériau composite, chaque profil (12) ayant une section transversale en forme de C et comprenant une bride (13) et deux ailettes (14) faisant saillie transversalement de la bride (13) ;
d) assemblage desdits profils (12) deux à deux le long des brides (13) respectives attenantes côte à côte aux paires respectives d'outils de support (15) de sorte que les profils (12) eux-mêmes aient des concavités opposées, pour obtenir lesdits longerons (7) ;
e) disposition longitudinale des outils de support (15) attenants et des longerons (7) précédemment obtenus sur la première paroi (5) précédemment obtenue, de sorte que les premières ailettes (14a) respectives des longerons (7) sont coplanaires en contact avec ladite première paroi (5), définissant ainsi un premier ensemble (16) de ladite structure (1) ;
f) stratification d'une troisième pluralité (17a) de couches dudit matériau composite préimprégné sur une deuxième plaque de formage (19) dudit moule de formage (11), pour former une partie principale (17) d'une deuxième peau (6a) en matériau composite, laquelle deuxième peau (6a) définit ladite deuxième paroi (6) ;
g) stratification d'une quatrième pluralité (18a) de couches dudit matériau composite préimprégné sur ladite deuxième plaque (19) ou sur une troisième plaque de formage (20) dudit moule de formage (11) séparée et distincte de la deuxième plaque (19), pour former une partie de fermeture (18) de ladite deuxième peau (6a) distincte et séparée de ladite partie principale (17) et pouvant être couplée à la partie principale (17) elle-même pour définir ladite deuxième paroi (6) ;
h) la mise en place d'au moins ladite partie principale (17) sur ledit premier ensemble (16) de sorte que la partie principale (17) est en contact avec les deuxièmes ailettes (14b) respectives des longerons (7), opposées auxdites premières ailettes (14a), pour définir une partie de ladite deuxième paroi (6) s'étendant de l'une de ladite première extrémité axiale (1a) ou la deuxième extrémité axiale (1b) jusqu'à un secteur transversal (S) prédéterminé de la structure en forme de caisson (1) axialement intercalé entre ladite première extrémité axiale (1a) et la deuxième extrémité axiale (1b), par rapport audit axe longitudinal (A), le groupe comprenant le premier ensemble (16) et la partie principale (17) définissant un deuxième ensemble (23) de ladite structure en forme de caisson (1) ;
i) après l'étape h) de mise en place, l'insertion dans lesdites cavités (8) et entre lesdits longerons (7), d'une série d'éléments de renforcement transversaux (22), alignés entre eux transversalement audit axe longitudinal (A) et au niveau dudit secteur transversal (S), pour définir une nervure de renforcement (21) de ladite structure en forme de caisson (1) disposée au niveau dudit secteur transversal (S) ;
l) après l'étape i) d'insertion, la mise en place de ladite partie de fermeture (18) sur un troisième ensemble de ladite structure en forme de caisson (1) comprenant le deuxième ensemble (23) et la nervure de renforcement (21), couplant la partie de fermeture (18) à la partie principale (17) de sorte que la partie de fermeture (18) s'étend dudit secteur transversal (S) à l'autre de ladite première extrémité axiale (1a) ou la deuxième extrémité axiale (1b), de sorte que la partie de fermeture (18) est en contact avec lesdites deuxièmes ailettes (14b) des longerons (7) et pour définir la partie résiduelle de ladite deuxième paroi (6) pour fermer la structure en forme de caisson (1).

2. Procédé selon la revendication 1 et comprenant en outre l'étape de :
m) après l'étape h) de mise en place de la partie principale, le durcissement dudit deuxième ensemble (23) en appliquant une température et une pression prédéterminée sur la première pluralité, la deuxième pluralité et la troisième pluralité (17a) de couches respectivement stratifiées de matériau composite.

3. Procédé selon la revendication 2, dans lequel ladite étape g) de stratification de la quatrième pluralité de couches est réalisée sur ladite troisième plaque de formage (20) séparée et distincte de la deuxième plaque de formage (19) ;
et dans lequel le procédé comprend également l'étape de :
n) durcissement de ladite partie de fermeture (18) en appliquant la température et la pression prédéterminée sur ladite quatrième pluralité (18a) de couches préalablement stratifiées sur ladite troisième plaque de formage (20).

4. Procédé selon la revendication 3, dans lequel ladite étape l) de mise en place de la partie de fermeture (18) est réalisée après l'étape n) de durcissement de la partie de fermeture (18).

5. Procédé selon la revendication 1, dans lequel ladite étape g) de stratification de la quatrième pluralité de couches est réalisée sur ladite deuxième plaque de formage (19), de sorte que la partie principale (17) et la partie de fermeture (18) sont agencées de manière coplanaire et adjacente sur la deuxième plaque de formage (19) elle-même ;
et dans lequel le procédé comprend également les étapes de :
o) fourniture d'un film séparateur (26), par exemple un film de matériau recouvert de Teflon, entre la partie principale (17) et la partie de fermeture (18) ;
p) recouvrement de la surface externe de la partie de fermeture (18) préalablement stratifiée avec ledit film séparateur (26) ;
q) après les étapes f) de stratification de la troisième pluralité de couches, g) de stratification de la quatrième pluralité de couches et p) de recouvrement, durcissement simultané de la partie principale (17) et de la partie de fermeture (18) ensemble en appliquant la température et la pression prédéterminée sur lesdites troisième (17a) et quatrième (18a) pluralités de couches préalablement stratifiées.

6. Procédé selon la revendication 5, et comprenant en outre les étapes de :
r) après l'étape p) de recouvrement et avant l'étape q) de durcissement, la mise en place de ladite partie principale (17) et de la partie de fermeture (18) sur ledit premier ensemble (16), de sorte que les surfaces externes respectives de ladite partie principale (17) et de la partie de fermeture (18) sont en contact avec lesdites deuxièmes ailettes (14b) des longerons (7) ;
s) après l'étape r) de mise en place, la réalisation de ladite étape q) de durcissement ;
t) découplage de la partie fermée (18) de la partie principale (17) et des longerons (7), au moyen dudit film séparateur (26) ;
u) après l'étape t) de découplage de la partie de fermeture, la réalisation des étapes i) d'insertion des éléments de renforcement (22) et l) de mise en place de la partie de fermeture (18).

7. Procédé selon l'une quelconque des revendications précédentes, dans lequel l'étape l) de mise en place de la partie de fermeture est réalisée en disposant la partie de fermeture (18) latéralement adjacente à la partie principale (17), de sorte qu'une région de jonction (G) est définie entre elles ;
et dans lequel le procédé comprend également l'étape de :
v) après l'étape l) de mise en place de la partie de fermeture, la jonction de la partie principale (17) et de la partie de fermeture (18) ensemble.

8. Procédé selon la revendication 7, dans lequel l'étape v) de jonction comprend les faits de :
disposer un corps de raccordement (25) au niveau dudit secteur transversal (S) et au-dessus de la région de jonction (G) ;
clouer ou riveter le corps d'épissage (25) à la partie principale (17) et à la partie de fermeture (18).

9. Procédé selon la revendication 7, dans lequel l'étape v) de jonction comprend le fait de :
disposer un corps d'épissage (25) réalisé avec le matériau composite préimprégné au niveau dudit secteur transversal (S) et au-dessus de la région de jonction (G).

10. Procédé selon la revendication 2, dans lequel :
lesdits outils de support (15) sont intérieurement creux et ont une composition à base de matériau de renforcement et de polymère apte à permettre la transition d'un état rigide à un état élastomère flexible et vice-versa en réponse à une action de chauffage et respectivement à une action de refroidissement ;
lesdits outils de support (15) sont configurés pour adopter l'état élastomère flexible à une température inférieure à la température de durcissement et supérieure à 50°C ;
l'étape c) est réalisée en stratifiant directement le matériau préimprégné constituant ladite deuxième pluralité de couches sur la surface externe des parois desdits outils de support (15), alors que ces derniers sont dans leur état rigide ; et
pendant l'étape m) de durcissement dudit deuxième ensemble, la pression de durcissement est appliquée à la fois à l'intérieur du moule de formage (11) et à l'intérieur des outils de support (15), dont les parois sont rendues flexibles par le passage de l'état rigide à l'état élastomère flexible et sont par conséquent poussées par la pression de durcissement elle-même à adhérer auxdites sections (12), à ladite première paroi (5) et au moins à ladite partie principale (17).

11. Procédé selon la revendication 10, dans lequel le polymère desdits outils de support (15) est un polymère thermodurcissable ou thermoplastique à mémoire de forme ;
et/ou dans lequel le matériau de renforcement desdits outils de support (15) comprend une ou plusieurs fibres élastiques.

12. Procédé selon la revendication 2, dans lequel lesdits outils de support (15) sont définis par des éléments rigides qui sont non déformables en réponse au chauffage et au refroidissement respectivement ;
dans lequel le procédé comprend en outre, avant les étapes c) de stratification, e) de disposition et m) de durcissement, les étapes successives de :
z1) application sur chaque outil de support (15), d'une couche d'agent séparateur pour faciliter l'extraction suivante de l'outil de support lui-même de la cavité (8) respective ;
z2) mise en place d'un sac tubulaire sur chaque outil de support (15) ainsi préparé, en laissant un excès du sac tubulaire à chaque extrémité de l'outil de support (15) lui-même pour une opération de scellement successive ;
z3) enveloppement d'un tissu de ventilation sur chaque outil de support (15) et sur l'extérieur du sac tubulaire, en fixant les bords avec un produit d'étanchéité ;
z4) mise en place d'un film séparateur tubulaire sur chaque outil de support (15) ainsi préparé, laissant un excès du film séparateur à chaque extrémité de l'outil de support (15) lui-même pour l'opération de scellement successive ;
z5) scellement des extrémités du sac tubulaire et du film séparateur tubulaire en utilisant un produit d'étanchéité ;
z6) application de vide et attente que le film séparateur tubulaire serre tout le revêtement ainsi préparé sur l'outil de support relatif.

13. Procédé selon la revendication 12, et comprenant en outre les étapes de :
y) après l'étape z6) d'application de vide, disposition en succession autour du deuxième ensemble (23), d'un film séparateur, d'un tissu de ventilation et d'un film d'ensachage externe ;
w) scellement du film d'ensachage externe, de sorte que le deuxième ensemble (23) est logé à l'intérieur de ce dernier ;
x) application du vide à l'intérieur du film d'ensachage externe jusqu'à ce que le matériau du film d'ensachage externe se serre contre les surfaces externes du deuxième ensemble (23) ;
et dans lequel la pression et la température prédéterminée mentionnées précédemment par rapport à l'étape m) de durcissement, sont appliquées à l'intérieur du film d'ensachage externe et à l'intérieur de chacun desdits sacs tubulaires.

14. Structure en forme de caisson (1) pour aéronefs (4), et en particulier pour un stabilisateur horizontal (2), réalisée avec un matériau composite préimprégné à matrice polymère renforcé en fibres, ladite structure (1) ayant un axe longitudinal (A), s'étendant longitudinalement entre une première extrémité axiale (1a) et une deuxième extrémité axiale (1b), et comprenant :
une première paroi longitudinale (5) ;
une deuxième paroi longitudinale (6) faisant face à la première paroi (5) et agencée espacée de la première paroi (5) elle-même selon une quantité non nulle ; et
une pluralité de longerons (7) s'étendant longitudinalement et entre ladite première paroi (5) et la deuxième paroi (6), raccordés à ces dernières et délimitant avec la première paroi (5) et la deuxième paroi (6), des cavités longitudinales (8) respectives ;
une nervure de renforcement (21) comprenant une série d'éléments de renforcement transversaux (22) insérés, chacun, dans l'une desdites cavités (8) et entre deux desdits longerons (7) adjacents, les éléments transversaux (22) étant alignés entre eux transversalement par rapport audit axe longitudinal (A) et au niveau d'un secteur transversal (S) de ladite structure en forme de caisson (1), intercalé entre ladite première extrémité axiale (1a) et la deuxième extrémité axiale (1b) ;
dans laquelle la deuxième paroi (6) comprend une partie principale (17) et une partie de fermeture (18) coplanaire entre elles et définissant deux pièces distinctes avec solution de continuité et séparées au niveau dudit secteur transversal (S).

15. Structure selon la revendication 14, dans laquelle la partie de fermeture (18) est couplée à la partie principale (17) au moyen d'un corps d'épissage (25),
et dans laquelle ledit corps d'épissage (25) est cloué ou riveté simultanément à la partie principale (17) et à la partie de fermeture (18).
